# EUROPEAN PATENT SPECIFICATION

(11) **EP 1 234 550 B1**
(45) Date of publication and mention of the grant of the patent: **18.11.2009**
(21) Application number: 01969814.1
(22) Date of filing: 14.09.2001
(51) Int. Cl.: A61C 8/00

(54) **DENTAL IMPLANT-CARRIER ASSEMBLY**
DENTALES IMPLANTATTRÄGERSYSTEM
ENSEMBLE IMPLANT DENTAIRE-TRANSPORTEUR

(30) Priority: 19.09.2000 ES 200002268; 20.06.2001 ES 200101432
(43) Date of publication of application: 28.08.2002
(73) Proprietor: Anitua Aldecoa, Eduardo, 01005 Vitoria (ES)
(72) Inventor: Anitua Aldecoa, Eduardo, 01005 Vitoria (ES)
(74) Representative: Urteaga Simarro, José Antonio
(86) International application number: PCT/ES2001/000349
(87) International publication number: WO 2002/024102

(56) References cited:
- WO-A1-98/03130
- WO-A1-99/18881
- WO-A2-99/17676
- DE-A- 4 326 841

## Description

The invention refers to a dental implant - carrier assembly, as disclosed in claim 1. The dental implant that is used is an evolution of the type described in reference WO-A-99/18881.

With respect to the implant described in WO-A-99/18881, it has been observed that certain features could be improved in order to increase its initial stability, improve the efficiency of its apical end, and to provide a range of implants that can be used not only for standard applications but also to replace any dental piece.

Document WO 98/03 130 discloses a dental implant-carrier assembly with an implant having heragonal head and a carrier comprising a casing, a screw and a holder.

These carriers consist of three basic parts: a casing, a screw, and a holder. The casing is hollow and is fastened to an hexagonal end of the implant. The screw is a screw that passes through the casing and threads into the internal axial cavity of the implant, keeping the casing in place on the implant. The screw projects out of the casing forming an abutment to which the holder is attached.

Existing carriers provide no means of keeping the connection between the screw and the holder in place, thus making it difficult to move the implant-carrier assembly.

In other cases, the connection is established by mechanical means. The disadvantage of this, however, is that even if the implant can be moved correctly, it is difficult to extract the holder with the risk that if it is forced the implant may be moved out of position or the initial stability lost.

It is an object of this invention to provide a dental implant - carrier assembly as disclosed in claim 1, that manages to:
- increase initial implant stability
- increase implant thread capability
- comprise a variety of implant sizes so that the implants can be adjusted to any dental piece
- facilitate implant transportation and its initial positioning
- allow that the carrier acts as a reference during implant installation, so that when several implants are installed, all implants can be positioned with the hexagon in the same position, thus making the orthodontist's work easier.

To achieve these objectives, the implant that showed pairs of cutting edges on its apical is modified by inclining each straight cutting edge. Thus, while in the case of WO-A-99/18881 the straight cutting edge operated in a radial direction in relation to the centre of the implant, in the present invention each straight cutting edge maintains its position at its end and leans back at a slight angle, so that it is the aforementioned end that cuts into in the bone initially and advances gradually to make the threading softer and less aggressive. The lean-back angle of these straight cutting edges ranges from 0° to 20°.

In the upper part of the implant, the area connecting the implant head to the threaded section of the implant has a taper of between 50 and 65°. Tests have been carried out that show that this degree of tapering in this area creates greater initial stability once the implant has been threaded in, without causing a significant increase in the distribution of stresses and even decreasing them.

As stated above, the general sizes of the implant are also modified, with the two above-mentioned features being retained as standard features thus creating a standard implant or implant type. Another two implant types are also defined, to be applied to lower incisors and to molars respectively, as well as another one that has been specially designed for hard and very hard bones, which we shall look at in more detail later.

The upper head in the standard implant has a diameter of 4.1 mm, and the upper hexagon measures 2.7 mm between faces and is 0.7 mm high, while the threaded section can have a diameter of 3.3, 3.75 or 4 mm.

The diameter of the incisor implant head is 3.6 mm, and the hexagon measures between 2.4 and 2.6 mm between faces and is 1.0 mm high. The diameter of the threaded section is 3.3 mm.

The diameter of the molar implant head is 5.5 mm, and the hexagon measures between 2.7 and 3.5 mm between faces and is between 0.7 and 1.2 mm high. The threaded section can have a diameter of 4, 4.5, 5, 5.5 or 6 mm.

It should also be pointed out that the performance of these implants can be improved, particularly when they are used to carry out work on patients with hard or very hard bones, by providing them with a more aggressive and therefore more effective cut, allowing excess bone from the operation to be removed more easily.

According to this invention, the implant is provided with cutting areas that begin right on the flat part of the apical end, and extend outwardly for a certain distance in the radial direction.

The aforementioned cutting areas end at a distance of the position corresponding to the base of the tapered threaded section, thus leaving enough space in-between to allow the excess bone to move out normally towards the removal area behind each cutting area, which, in existing implants, is in the form of a tapered convex shape pointing outwards.

Standard sizes have been discovered that will make the aforementioned implant design perform better. These sizes refer to the length of the implant, the angles of the tapered threaded sections and the removal areas as well as the length of the implant's tapered threaded sections.

These sizes are adjusted according to the following measurements:
L. length of the implant in millimeters.
C. Length of the tapered threaded section in millimeters.
α Angle of the tapered threaded section.
β Angle of the removal area.

| L | C | α | β |
|---|---|---|---|
| 8.5 | 2.9 | 9° | 4.2° |
| 10 | 2.9 | 9° | 4.2° |
| 11.5 | 4.6 | 5.22° | 3.3° |
| 13 | 4.6 | 5.22° | 3.3° |
| 15 | 4.6 | 5.22° | 3.3° |
| 18 | 4.6 | 5.22° | 3.3° |
| 20 | 4.6 | 5.22° | 3.3° |

The carrier defined by the present invention has two specific features. One of these features is a hexagonal abutment on the outer end of the casing, the position of which matches the position of the hexagonal cavity that the casing is provided with in order to receive the hexagonal end of the implant.

Thus, when the carrier positions the implant in the desired place, the position of the casing is hexagonal abutment will correspond with the hexagonal abutment of the implant in such a way that it enables the implants to be situated in an identical position, with all the prosthodontic advantages that this brings with it.

As a second feature, the projecting part of the screw, which is enveloped by the holder, is provided with an annular neck into which an O-ring seal made of suitable material is fitted.

When the holder envelops this end of the screw, the O-ring seal fixes the implant, the casing and the screw in position. The holder can be removed from the screw when required without any difficulty whatsoever,>

The threaded section of the implant can incorporate a double thread to enable it to be screwed more quickly into the patient's bone.

The size of the carrier will be adjusted to the size of the implant. Each implant will thus have a corresponding carrier.

These and other aspects of the preferred embodiment of the invention can be seen in greater detail in the drawings attached, details of which are given below:
Figure 1 is an elevation view of the implant according to the invention.
Figure 2 is a lower view of Figure 1
Figure 3 is an upper view of Figure 1
Figure 4 is a mid-section elevation view of the one of the carrier's components: the casing, according to the invention.
Figure 5 is a view of Figure 4 from the right.
Figure 6 is a view of Figure 5 from the left.
Figure 7 is an elevation view of another of the carrier's components: the screw.
Figure 8 is a view of Figure 7 from the left.
Figure 9 is an elevation view of another of the carrier's components: the holder, with a cross-section of the left end.
Figure 10 is a view of Figure 9 from the left.
Figure 11 is an elevation of an implant for hard or very hard bones, according to the invention.
Figure 12 is a view from above of fig 11.

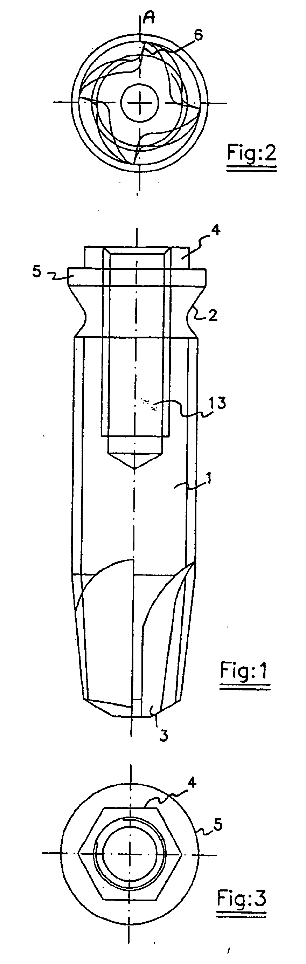

As can be seen in figures 1, 2 and 3, the implant consists of a threaded section (1), an apical end (3), and an upper section comprising the head (5) and the hexagonal end (4), to facilitate its insertion and prosthodontic reconstruction. The head (5) is connected to the threaded section (1) through a tapered section (2), which has a taper of between 48 and 65°, and a cylindrical section with a height of 0.5 mm.

In figure 2 we can see the line or straight cutting edge (6) of the apical end. The figure shows that it is separated from the radial position in such a way that the end that is furthest away projects forward to make the cut, and does so by rotating in an anti-clockwise direction according to the position in figure 2.

The fact that this cutting edge (6) is inclined at an angle of between 0 and 20° in relation to the radial position and the anti-clockwise direction of the rotation means that it enters more deeply when it begins cutting and does so more gradually and smoothly, but also more effectively, which is the aim of the invention.

In figure 1 we can also see the blind threaded hole (13), which extends axially from the hexagonal end (4), with said hole and hexagonal end being the features that are typically used to position the screw, the casing, and the prosthodontic components.

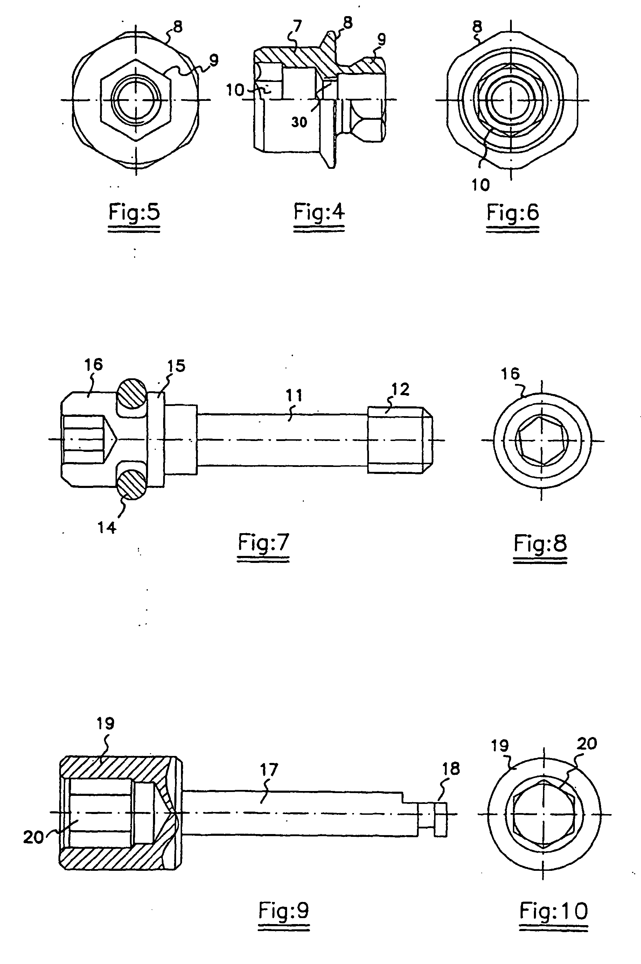

To achieve this, the casing (7) in figure 4 is positioned in such a way that its hexagonal cavity (10) embraces the implant hexagonal end (4), while the screw (11) in figure 7 is introduced through the casing (7), and its threaded end (12) is screwed into the blind threaded hole (13) of the implant. When being introduced, the threaded end (12) of the screw (11) passes through the internal threaded section (30) of the casing, thus guiding the screw into place.

In conventional usage of the implant and carrier of the figures, when the casing (7) and the screw (11) are mounted on the implant, the end (16) of the screw (11) protrudes outwards. This end (16) is then housed in the interior (20) of the section (19) of the holder (17) of Figure 9, so that when a suitable tool is used, for example, connected to the end (18), it moves the implant-carrier assembly into the desired position.

By this invention, the casing (7) is provided with the hexagonal parts (8, 9). The position of the faces of these hexagonal parts (,8, 9) match the faces of the hexagonal cavity (10) of said casing, and therefore also match the faces of the hexagonal end (4) of the implant.

The fact that the position of the hexagonal faces of the aforementioned parts coincides mean that, irrespective of the condition of the implant-carrier assembly, there will always be a valid reference indicating the exact position of the hexagonal end (4) of the implant.

When transporting and placing the dental implant - carrier assembly, the hexagonal base(8) of the casing provides a positional reference. When the holder (11) is removed, the reference is then provided by the hexagonal parts (8, 9) of said casing (7). In other words, the position occupied by the hexagonal end (4) of the implant will always be able to be identified.

In figure 7 we can see that the screw (11) is provided with the O-ring seal (14), housed in an annular neck between end (16) and abutment (15). When this end (15, 16) is housed in the cavity (20) of the holder (17), the O-ring seal (14) presses against the inner walls of the cavity (20) thus keeping the implant-carrier assembly perfectly in position.

Once the implant-carrier assembly has been moved and positioned as desired, the holder (11) is then removed. The pressure exerted by the O-ring seal (14) allows this to be done easily and smoothly.

These structural modifications enable the dental implant - carrier assembly to provide significantly improved performance, thus meeting the objectives of the invention.

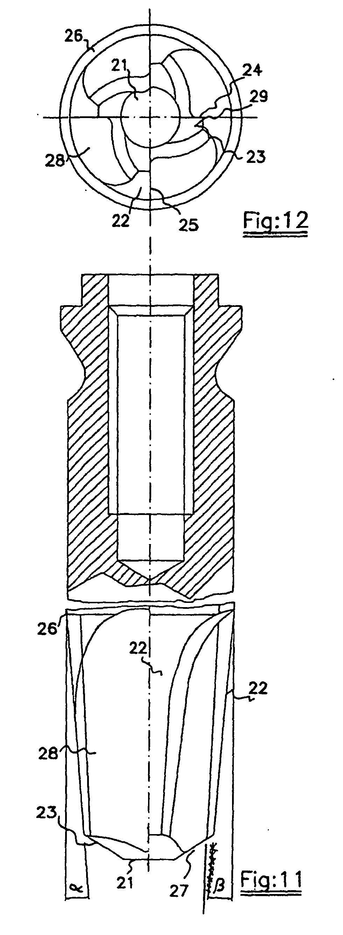

The flat apical end (21) of the implant (27) can be seen in figure 11. With existing techniques the laterals protrude from the surface of the apical end. This section crowns the tapered threaded section (22) that extends up to the end (26). Generally, the implant runs from this end to its lower hexagonal end where it connects with the implant manipulating tool. The head of the implant and the hex, which are not numbered, can be seen at this end.

In this particular case, and as detailed in figure 12, we can see the four cutting areas (24), which radiate out from the flat part (21) until they reach a circular section (29) at a certain distance from the edge (26). This distance provides a gap through which the cut bone is directed to the removal area (28) behind the cutting areas (24).

The tapered threaded section (22) runs from the circular section (29) and vertical wall (25), to the cutting area (24) and behind it up to the tapered convex removal area (28).

The angles (α) and (β) in figure 11 determine the measurements of the taper of the tapered threaded section (22) and the removal area (28).

## Claims

1. A dental implant - carrier assembly, that comprises, firstly, a dental implant provided with a threaded section (1), an apical end (3) with cutting edges -one of which is straight -, a head (5), a hexagonal end (4) protruding out of the head (5), and a blind threaded cavity (13); and secondly, a carrier that comprises a casing (7), a screw (11) and a holder (17), where the casing is mounted on the hexagonal end (4), the screw (11) is provided with a threaded end (12) that passes through the casing (7) and is screwed into the implant blind threaded cavity (13), and the screw (11) is provided with a free end that is operated by the holder (17), wherein the dental implant - carrier assembly is **characterized in that**:
- the area connecting the implant head (5) to the threaded section (1) of the implant has a taper of between 48 and 65°,
- the angle formed between the straight cutting edge (6) of the apical end of the implant and its theoretical radial position (A) is between 0 and 20°,
- the casing (7) is provided with an abutment that consist of a hexagonal abutment (9) situated on a hexagonal base (8), the sides of the hexagonal abutment (9) and the hexagonal base (8) are in line with each other and with the faces of the hexagonal end (4) of the implant,
- the connection between the holder (17) and the screw (11) is enhanced by an O-ring seal (14) made of suitable material, which is positioned at the projecting end (15, 16) of the screw (11), being the projecting and (15, 16) housed in a cavity (20) of the holder (17).

2. A dental implant - carrier assembly, according to claim 1, which is **characterized in that** the head (5) has a diameter of 4.1 mm, the hexagonal end (4) measures 2.7 mm between faces and is 0.7 mm high, the threaded section (1) has a diameter of 3.3, 3.75 or 4 mm.

3. A dental implant - carrier assembly, according to claim 1, which is **characterized in that**, in its application to incisors, the diameter of the implant head (5) is 3.6 mm, the hexagonal end (4) measures between 2.4 and 2.6 mm between faces and is 1 mm high, the diameter of the threaded section (1) is 3.3 mm.

4. A dental implant - carrier assembly, according to claim 1, which is **characterized in that**, in its application to molars, the diameter of the implant head (5) is 5.5 mm, the hexagonal end (4) measures between 2.7 and 3.5 mm between faces and is between 0.7 and 1.2 mm high, the threaded section (1) can have a diameter of 4, 4.5, 5, 5.5 or 6 mm.

5. A dental implant - carrier assembly, according to claim 1, which is **characterized in that** the dental implant (27) is provided with cutting areas (24) that radiate out from a flat part (21) on the apical end, that create respective vertical walls (25), and that are crowned by circular sections (29) from which the tapered threaded section (22) begins, being the taper of the exterior of threaded section (22) determined by a generator angle (α) of between 9 and 5.21°, in relation to the vertical, while the generator angle (β) of the taper of the interior of the threaded section (22) is set at between 4.2 and 3.3° in relation to the vertical, with these values being adjusted to total implant lengths ranging from 8.5 to 20 mm and to the lengths of the tapered threaded section, which range from 2.9 to 4.6 mm.

## Patentansprüche

1. Ein Zahnimplantat - Trägeranordnung, das erstens ein Zahnimplantat enthält, welches mit einem Gewindeabschnitt (1), einem apikalen Ende (3) mit Schneidekanten - von denen eine gerade ist - ausgestattet ist, ebenso wie mit einem Kopf (5), einem hexagonalen Ende (4), das aus dem Kopf hervorsteht, und mit einer blinden Gewindebohrung (13); und zweitens, ein Träger, der ein Gehäuse (7), eine Schraube (11) und eine Fassung (17) umfasst, bei der das Gehäuse an dem hexagonalen Ende (4) montiert ist und die Schraube (11) mit einem Gewindeende (12) versehen ist, das durch das Gehäuse (7) verläuft und mit der blinden Gewindebohrung (13) des Implantats verschraubt ist. Die Schraube (13) ist zudem mit einem freien Ende versehen, das von der Fassung (17) gesteuert wird, wobei das Zahnimplantat - Trägeranordnung **dadurch gekennzeichnet ist, dass**:
- die Fläche, die den Implantatkopf (5) mit dem Gewindeabschnitt (1) des Implantats verbindet, weist eine Verjüngung von zwischen 48 und 65° auf,
- der Winkel, der zwischen der geraden Schneidekante (6) des apikalen Endes des Implantats und dessen theoretischer radialer Position (A) gebildet wird, liegt zwischen 0 und 20°,
- das Gehäuse (7) ist mit einem Abutment versehen, das aus einem hexagonalen Abutment (9), welches auf einer hexagonalen Basis (8) gelegen ist, wobei die Seiten des hexagonalen Abutments (9) und die hexagonale Basis (8) linear zueinander und zu den Seitenflächen des hexagonalen Endes (4) des Implantats liegen,
- die Verbindung zwischen der Fassung (17) und der Schraube (11) wird verstärkt durch eine O-Dichtung (14), die aus geeignetem Material besteht und am vorspringenden Ende (15, 16) der Schraube (11) positioniert ist, wobei das vorspringende Ende (15, 16) in einem Hohlraum (20) in der Fassung (17) untergebracht ist.

2. Ein Zahnimplantat - Trägeranordnung, in Übereinstimmung mit Anspruch 1, **dadurch gekennzeichnet, dass** der Kopf (5) einen Durchmesser von 4,1 mm aufweist, das hexagonale Ende (4) 2,7 mm zwischen Seitenflächen misst sowie 0,7 mm hoch ist, und der Gewindeabschnitt (1) einen Durchmesser von 3,3, 3,75 oder 4 mm aufweist.

3. Ein Zahnimplantat - Trägeranordnung, in Übereinstimmung mit Anspruch 1, **dadurch gekennzeichnet, dass** - bei dessen Anwendung auf Schneidezähne - der Durchmesser des Implantat-Kopfes (5) 3,6 mm beträgt, das hexagonale Ende (4) zwischen 2,4 und 2,6 mm zwischen Seitenflächen misst sowie 1 mm hoch ist, und der Durchmesser des Gewindeabschnitts (1) 3,3 mm beträgt.

4. Ein Zahnimplantat - Trägeranordnung, in Übereinstimmung mit Anspruch 1, **dadurch gekennzeichnet, dass** - bei dessen Anwendung auf Backenzähne - der Durchmesser des Implantat-Kopfes (5) 5,5 mm beträgt, das hexagonale Ende (4) zwischen 2,7 und 3,5 mm zwischen Seitenflächen misst sowie zwischen 0,7 und 1,2 mm hoch ist, und der Gewindeabschnitt (1) einen Durchmesser von 4, 4,5, 5, 5,5, oder 6 mm aufweist.

5. Ein Zahnimplantat - Trägeranordnung, in Übereinstimmung mit Anspruch 1, **dadurch gekennzeichnet, dass** das Zahnimplantat (27) mit Schneideflächen (24) versehen ist, welche sich von einem flachen Teil (21) an dem apikalen Ende aus verbreiten und die entsprechenden vertikalen Wände (25) bilden, sowie durch kreisförmige Abschnitte (29) gekrönt sind, von denen aus der kegelförmige Gewindeabschnitt (22) beginnt, wobei der Verjüngung des Äußeren des Gewindeabschnitts (22) von einem erzeugenden Winkel (α) mit zwischen 9 und 5,21° in Bezug auf die Vertikale bestimmt wird, während der erzeugende Winkel (β) der Verjüngung im Inneren des Gewindeabschnitts auf zwischen 4,2 und 3,3° in Bezug auf die Vertikale gesetzt ist, wobei diese Werte an die Gesamtlängen des Implantats angepasst sind, welche zwischen 8,5 und 20 mm liegen, sowie an die Längen des kegelförmige Gewindeabschnitts, welche zwischen 2,9 und 4,6 mm liegen.

## Revendications

1. Un système implant dentaire - transporteur qui comprend d'abord un implant dentaire muni d'une section filetée (1), une extrémité apicale (3) avec des bords coupants - dont l'un est droit - , une tête (5) avec une extrémité hexagonale (4) dépassant de la tête (5), et un cavité filetée borgne (13) ; et, deuxièmement, un transporteur qui comprend une enveloppe (7), une vis (11) et un support (17) où l'enveloppe est montée sur l'extrémité hexagonale (4), la vis (11) est munie d'une extrémité filetée (12) qui passe dans l'enveloppe (7) et est vissée dans la cavité filetée borgne (13) de l'implant, et la vis (11) est munie d'une extrémité libre qui est actionnée par le support (17), où le système implant dentaire - support est **caractérisé par le fait que** :
- la partie reliant la tête (5) de l'implant à la section filetée (1) de l'implant a une forme conique d'environ 48 à 65°.
- l'angle formé entre le bord coupant droit (6) de l'extrémité apicale de l'implant et sa position radiale théorique (A) est comprise entre 0 et 20°.
- l'enveloppe (7) est munie d'un ancrage qui consiste en un ancrage hexagonal (9) situé sur une base hexagonale (8), les côtés de l'ancrage hexagonal (9) et la base hexagonale (8) sont alignés l'un sur l'autre et avec les faces de l'extrémité hexagonale (4) de l'implant,
- la connexion entre le support (17) et la vis (11) est accrue par un joint torique (14) fabriqué dans un matériau adapté, qui est positionné sur l'extrémité de projection (15, 16) de la vis (11), l'extrémité de projection (15, 16) étant logée dans une cavité (20) du support (17).

2. Un système implant dentaire - transporteur, conformément à la revendication 1, qui est **caractérisé par le fait que** la tête (5) a un diamètre de 4,1 mm, l'extrémité hexagonale (4) mesure 2,7 mm entre les faces et 0,7 mm de hauteur, la section filetée (1) a un diamètre de 3,3, 3,75 ou 4 mm.

3. Un système implant dentaire - transporteur, conformément à la revendication 1 qui est **caractérisé par le fait que** dans son application sur les incisives, le diamètre de la tête (5) de l'implant est de 3,6 mm, l'extrémité hexagonale (4) mesure entre 2,4 et 2,6 mm entre les faces et 1 mm de hauteur, le diamètre de la section filetée (1) est de 3,3 mm.

4. Un système implant dentaire - transporteur, conformément à la revendication 1 qui est **caractérisé par le fait que** dans son application sur les molaires, le diamètre de la tête (5) de l'implant est de 5,5 mm, l'extrémité hexagonale (4) mesure entre 2,7 et 3,5 mm entre les faces et entre 0,7 mm et 1,2 mm de hauteur, le diamètre de la section filetée (1) est de 4 - 4,5 - 5 - 5,5 ou 6 mm.

5. Un système implant dentaire - transporteur, conformément à la revendication 1 qui est **caractérisé par le fait que** l'implant dentaire (27) est muni de parties coupantes (24) qui ressortent d'une partie plate (21) sur l'extrémité apicale, qui crée des parois verticales respectives (25) et qui sont couronnées par des sections circulaires (29) à partir desquelles la section filetée (22) conique commence, le cône de l'extérieur de la partie filetée (22) étant déterminé par un angle générateur (α) compris entre 9 et 5,21°, par rapport au vertical, tandis que l'angle générateur (β) du cône de l'intérieur de la section filetée (22) est placé entre 4,2 et 3,3° par rapport au vertical, ces valeurs étant ajustées aux longueurs d'implant totales de 8,5 à 20 mm et aux longueurs de la section filetée conique de 2,9 à 4,6 mm.
